# EUROPÄISCHE PATENTANMELDUNG

(11) **EP 1 614 878 A1**
(43) Veröffentlichungstag der Anmeldung: **11.01.2006**
(21) Anmeldenummer: 04015786.9
(22) Anmeldetag: 05.07.2004
(51) Int. Cl.: F02C 7/052, F02C 7/18

(54) **Verfahren und Vorrichtung zur Filterung eines Luftgemisches in einer Gasturbine**

(71) Anmelder: SIEMENS AKTIENGESELLSCHAFT, 80333 München (DE)
(72) Erfinder: Hömke, Sabine, 45472 Mülheim (DE)

(57) **Zusammenfassung**

Bei einem erfindungsgemäßen Verfahren und einer Vorrichtung (1) zur Filterung eines Luftgemisches (3) ist dessen zweistufige Filterung in einer Grob- (9) und einer Feinfilterstufe (13) vorgesehen, wobei das Luftgemisch (3) nach der Grobfilterung (9) einem Verdichter (11) und danach der Feinfilterstufe (13) zugeführt wird.

Bevorzugt wird das fein gefilterte Luftgemisch (3) bei einer Kraftwerksanlage (17) zur Kühlung von Turbinenkomponenten wie beispielsweise Turbinenschaufeln (19) verwendet.

## Beschreibung

Die Erfindung betrifft ein Verfahren und eine Vorrichtung zur Filterung eines Luftgemisches, insbesondere bei einer Kraftwerksanlage.

Bei einer Vielzahl an technischen Prozessen ist eine Mindestgüte eines Luftgemisches erforderlich, um den technischen Prozess aufrecht zu erhalten oder um bestimmte Rahmenbedingungen, wie beispielsweise Umweltschutzvorschriften einzuhalten.

Beispielsweise erfordert die Kühlung von Anlagenkomponenten wie Turbinenschaufeln ein sehr reines Luftgemisch im Hinblick auf im Luftgemisch vorhandene Partikel, um einerseits die Anlagenkomponente genügend kühlen zu können und um andererseits eine Beschädigung der Komponente zu vermeiden. Eine Beschädigung der Komponente kann beispielsweise dadurch hervorgerufen werden, dass ein Partikel enthaltendes Kühlluftgemisch durch direkten Kontakt mit der Turbinenschaufel einen unerwünschten Abrieb an der Turbinenschaufel erzeugt.

Umweltschutzbedingungen können beispielsweise auf einen maximal zulässigen Schadstoffgehalt in einem Luftgemisch abzielen, so dass vor Abgabe des Luftgemisches an die Umwelt eine Filterung stattfinden muss, um die Vorschriften einzuhalten.

Neben die genannten Erfordernisse an die Reinheit des Luftgemisches treten in vielen Fällen weitere Anforderungen, wie beispielsweise ein zur Aufrechterhaltung oder Betrieb eines technischen Prozesses erforderlicher Luftdruck und/oder Lufttemperatur; daher ist bei vielen technischen Anlagen im Zusammenhang oder in Ergänzung zur Luftfilterung eine Komprimierung des Luftgemisches mittels eines Verdichters oder anderer geeigneter Mittel vorgesehen.

Bei einer Kraftwerksanlage umfassend mindestens eine Gasturbine wird Luft benötigt, welche aus der Umgebung angesaugt, gefiltert, verdichtet und zu mehreren Zwecken mindestens einer Anlagenkomponente des Kraftwerks zugeführt wird.

Zur Aufrechterhaltung der Verbrennung eines Brennstoffs, wie beispielsweise Erdgas, wird Verbrennungsluft benötigt, welche einer Brennkammer der Gasturbine zugeführt wird. Diese Verbrennungsluft darf nicht zu stark verschmutzt sein, um zum einen den Verbrennungsprozess mit genügender Effizienz aufrecht zu erhalten und zum anderen um eine zu starke Verschmutzung des bei der Verbrennung entstehenden Abgases zu vermeiden.

Des Weiteren wird bei bekannten Gasturbinen Kühlluft für eine Anzahl an Turbinenkomponenten benötigt. Z.B müssen die mit dem Heißgas aus der Brennkammer in Kontakt tretenden Turbinenschaufeln gekühlt werden, um eine Beschädigung der Turbinenschaufeln zu vermeiden. Dazu sind Turbinenschaufeln oftmals als Hohlkörper ausgebildet, in welche Kühlluft eingeleitet wird.

Ein anderes Kühlerfordernis bei einer Gasturbine besteht bei der Brennkammerwand der Brennkammer. Da diese Komponente ebenfalls mit extrem heißem Gas in Berührung kommt, ist üblicherweise auch für diese Komponente eine Kühlung vorgesehen, meist eine so genannte Hinterwandkühlung, wobei der dem Heißgas abgewandten Seite der Brennkammerwand ein Kühlluftstrom zugeführt wird, welcher durch Entlangstreichen an der Rückseite der Brennkammerwand Hitze abführen kann.

Bei bekannten Kraftwerksanlagen wird die mittels des Ansaughauses aus der Umgebung angesaugte Luft bereits im Ansaughaus einer Feinfilterung unterzogen, so dass die im Luftgemisch nach der Filterung noch vorhandenen Partikel nur noch eine sehr kleine Partikelgröße aufweisen.

Das derart angesaugte und fein gefilterte Luftgemisch wird dann einem Verdichter und danach einem Luftverbraucher, wie beispielsweise den Turbinenschaufeln oder der Brennkammer zugeführt.

Nachteilig dabei ist, dass verursacht durch Filterung im Ansaughaus ein hoher Druckverlust der angesaugten Luft in Kauf genommen werden muss; der erforderliche Luftdruck für das Luftgemisch muss dann vollständig vom Verdichter erzeugt werden.

Die bei der Filterung der angesaugten Luft auftretenden Druckverluste vermindern den Wirkungsgrad der Turbine.

Der Erfindung liegt daher die Aufgabe zugrunde, ein effizientes Verfahren sowie eine Vorrichtung zur Filterung eines Luftgemisches anzugeben, mittels welcher ein guter Wirkungsgrad erzielbar ist.

Bezüglich des Verfahrens wird die Aufgabe erfindungsgemäß gelöst durch folgende Schritte:
1. Grobfiltern des Luftgemisches,
2. Zuführen des grob gefilterten Luftgemisches zu einem Verdichter und
3. Feinfiltern des den Verdichter verlassenden Luftgemisches.

Die Erfindung geht dabei von der Überlegung aus, dass sich Druckverluste bei der Filterung des Luftgemisches wesentlich weniger in einem verminderten Wirkungsgrad niederschlagen, wenn die Filterung des Luftgemisches auf einem höheren Druckniveau stattfindet als bisher im Stand der Technik vorgesehen. Dadurch erhöht sich der Wirkungsgrad. Des Weiteren ist durch die zweistufige Filterung eine hohe Luftgüte bezüglich im Luftgemisch vorhandener Schmutzpartikel erzielbar.

Bevorzugt wird mindestens ein Teil des fein gefilterten Luftgemisches bei einer Kraftwerksanlage zur Kühlung mindestens einer Komponente einer Turbine verwendet.

Diese Ausführungsform ist im Zusammenhang mit einer Kraftwerksanlage sehr vorteilhaft, da die dabei zur Kühlung verwendete Luft eine hohe Luftreinheit aufweisen muss, um insbesondere Beschädigungen von Turbinenkomponenten zu vermeiden.

Besonders bevorzugt umfasst die Turbinenkomponente mindestens eine Turbinenschaufel oder/und eine Brennkammerwand.

Die genannten Komponenten sind wesentliche Teile einer Turbine, bei welchen üblicherweise eine Kühlung mittels Kühlluft erforderlich ist. Dabei sollten mindestens diejenigen Turbinenschaufeln gekühlt werden, welche vom Heißgas unmittelbar nach dessen Verlassen der Brennkammer angeströmt werden. Es können aber auch weitere Turbinenschaufeln nachgelagerter Druckstufen für eine derartige Kühlung vorgesehen sein.

Alternativ oder in Ergänzung wird mindestens ein Teil des fein gefilterten Luftgemisches bei einer Kraftwerksanlage als Verbrennungsluftgemisch einer Turbinenbrennkammer zugeführt.

Diese Ausführungsform eignet sich insbesondere für solche Anwendungsfälle, in welchen zur Erzielung eines guten Verbrennungsergebnisses oder/und zur Einhaltung von Umweltbestimmungen eine hohe Luftreinheit der Verbrennungsluft erforderlich ist.

In einer weiteren Ausführungsform wird mindestens ein Teil des fein gefilterten Luftgemisches als Kühlluft für mindestens einen Generator einer Kraftwerksanlage verwendet.

Neben der Turbine erfordert üblicherweise auch ein an die Turbine gekoppelter Generator zur Erzeugung von elektrischer Energie eine Kühlung von Generatorkomponenten, beispielsweise von Generatorwicklungen. In den Generatorwicklungen treten während des Betriebs der Kraftwerksanlage hohe Ströme auf, welche infolge des Widerstands der Generatorwicklungen Verlustenergie in Form von Wärme erzeugen. Dies unerwünschte Verlustwärme muss dann zur Vermeidung von Generatorbeschädigungen und/oder zur Steigerung des Generatorwirkungsgrads abgeführt werden, was bei der vorliegenden Ausführungsform vorgesehen ist.

Bezüglich der Vorrichtung zur Filterung eines Luftgemisches wird die Aufgabe erfindungsgemäß gelöst durch eine Vorrichtung mit
- einem Ansaughaus, mittels welchem das Luftgemisch aus einer Umgebung ansaugbar ist,
- ein erstes vom Ansaughaus umfasstes Filter zur Grobfilterung des Luftgemisches,
- einen Verdichter zur Druckerhöhung des grob gefilterten Luftgemisches, und
- ein zweites, dem Verdichter in Strömungsrichtung des Luftgemisches nachgeschaltetes Filter zur Feinfilterung des Luftgemisches.

Bevorzugt umfasst die Vorrichtung weiterhin eine Turbine, welcher mindestens ein Teil des fein gefilterten Luftgemisches zur Kühlung mindestens einer Komponente der Turbine zuführbar ist.

Dabei umfasst die Turbinenkomponente bevorzugt mindestens eine Turbinenschaufel oder/und eine Brennkammerwand.

Weiterhin kann mindestens ein Teil des fein gefilterten Luftgemisches bei einer Kraftwerksanlage als Verbrennungsluftgemisch einer Turbinenbrennkammer zuführbar sein.

Alternativ oder in Ergänzung ist mindestens ein Teil des fein gefilterten Luftgemisches mindestens einem Generator einer Kraftwerksanlage als Kühlluft zuführbar.

Im Folgenden wird ein Ausführungsbeispiel der Erfindung näher dargestellt.

Es zeigt:
- FIG: eine Kraftwerksanlage umfassend eine erfindungsgemäße Vorrichtung.

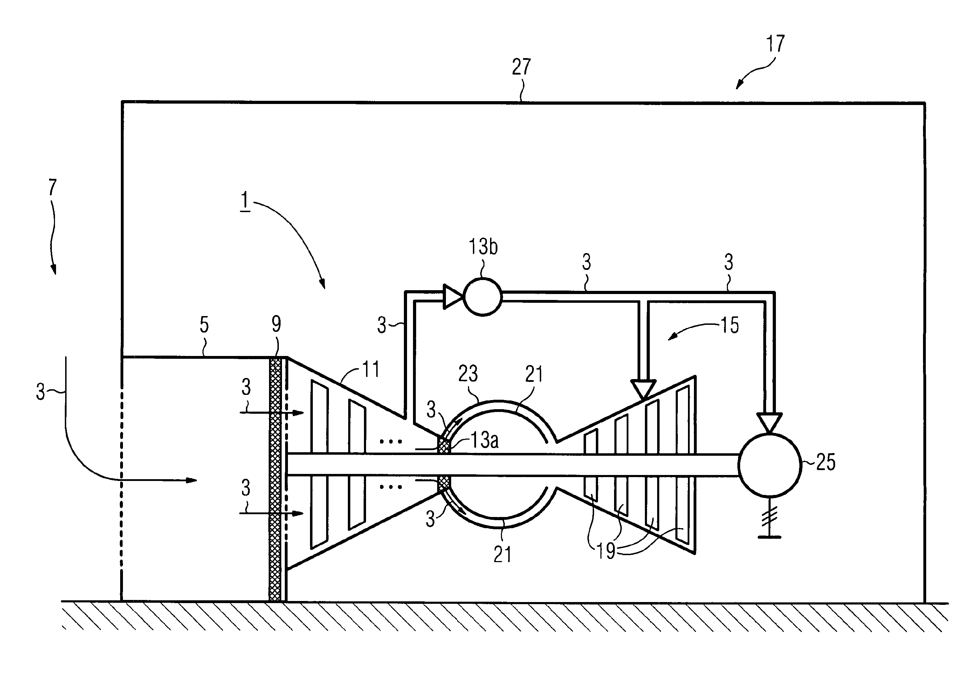

In der Figur ist eine Kraftwerksanlage 17 dargestellt, welche ein Maschinenhaus 27 umfasst, in welchem ein oder mehrere Turbinen 15 sowie an die Turbinen 15 angekoppelte Generatoren 25 installiert sind.

Die Turbinen 15 umfassen einen Verdichter 11, eine Brennkammer 21 und eine oder mehrere Turbinenstufen umfassend Turbinenschaufeln 19.

Die Kraftwerksanlage 17 umfasst weiterhin ein Ansaughaus 5 zum Ansaugen eines Luftgemisches 3 aus einer Umgebung 7. Das Ansaughaus 5 hat die Aufgabe, das Luftgemisch 3 dem Verdichter 11 zuzuführen.

Zur Filterung des Luftgemisches 3 in einem ersten Schritt ist ein erstes Filter 9 zur Grobfilterung des Luftgemisches 3 vorgesehen.

Eine weitere Filterstufe für das Luftgemisch 3 ist durch ein zweites Filter 13a,13b gebildet, welches von verdichteter Luft aus dem Verdichter 11 gespeist wird. Dieses zweite Filter 13b dient zur Feinfilterung des bereits verdichteten Luftgemisches 3.

Das zweite Filter 13a,13b kann am Ausgang des Verdichters 11 angeordnet sein, um beispielsweise das mittels des Verdichters 11 komprimierte Luftgemisch 3 einer Brennkammerwand 21 der Brennkammer 23 zu deren Kühlung mittels Hinterwandkühlung zuzuführen.

Ergänzend oder als Alternative kann das zweite Filter 13a,13b auch gespeist werden vom verdichteten Luftgemisch 3, welches dem Verdichter 11 entnommen wurde, bevor es alle Verdichterstufen des Verdichters 11 durchlaufen hat. Ein derartiges Luftgemisch 3 ist dann besonders geeignet zur Kühlung der Turbinenschaufeln 19 und/oder zur Kühlung von Komponenten des Generators 25.

### Die Erfindung lässt sich folgendermaßen zusammenfassen:

Bei einem erfindungsgemäßen Verfahren und einer Vorrichtung zur Filterung eines Luftgemisches ist dessen zweistufige Filterung in einer Grob- und einer Feinfilterstufe vorgesehen, wobei das Luftgemisch nach der Grobfilterung einem Verdichter und danach der Feinfilterstufe zugeführt wird.

Bevorzugt wird das fein gefilterte Luftgemisch bei einer Kraftwerksanlage zur Kühlung von Turbinenkomponenten wie beispielsweise Turbinenschaufeln verwendet.

## Patentansprüche

1. Verfahren zur Filterung eines Luftgemisches (3), **gekennzeichnet durch** folgende Schritte:
a) Grobfiltern des Luftgemisches (3),
b) Zuführen des grob gefilterten Luftgemisches (3) zu einem Verdichter (11), und
c) Feinfiltern des den Verdichter (11) verlassenden Luftgemisches (3).

2. Verfahren nach Anspruch 1,
**dadurch gekennzeichnet, dass**
mindestens ein Teil des fein gefilterten Luftgemisches (3) bei einer Kraftwerksanlage (17) zur Kühlung mindestens einer Komponente einer Turbine (15) verwendet wird.

3. Verfahren nach Anspruch 2,
**dadurch gekennzeichnet, dass**
die Turbinenkomponente mindestens eine Turbinenschaufel (19) oder/und eine Brennkammerwand (21) umfasst.

4. Verfahren nach einem der Ansprüche 1 bis 3,
**dadurch gekennzeichnet, dass**
mindestens ein Teil des fein gefilterten Luftgemisches (3) bei einer Kraftwerksanlage (17) als Verbrennungsluftgemisch einer Turbinenbrennkammer (23) zugeführt wird.

5. Verfahren nach einem der Ansprüche 1 bis 4,
**dadurch gekennzeichnet, dass**
das mindestens ein Teil des fein gefilterten Luftgemisches (3) als Kühlluft für mindestens einen Generator (25) einer Kraftwerksanlage (17) verwendet wird.

6. Vorrichtung (1) zur Filterung eines Luftgemisches (3),
**gekennzeichnet durch**
- ein Ansaughaus (5), mittels welchem das Luftgemisch (3) aus einer Umgebung (7) ansaugbar ist,
- ein erstes vom Ansaughaus (5) umfasstes Filter (9) zur Grobfilterung des Luftgemisches (3),
- einen Verdichter (11) zur Druckerhöhung des grob gefilterten Luftgemisches, und
- ein zweites (13), dem Verdichter in Strömungsrichtung des Luftgemisches nachgeschaltetes Filter zur Feinfilterung des Luftgemisches.

7. Vorrichtung (1) nach Anspruch 6,
**gekennzeichnet durch**
mindestens eine Turbine (15), welcher mindestens ein Teil des fein gefilterten Luftgemisches (3) zur Kühlung mindestens einer Komponente der Turbine (15) zuführbar ist.

8. Vorrichtung (1) nach Anspruch 7,
**dadurch gekennzeichnet, dass**
die Turbinenkomponente mindestens eine Turbinenschaufel (19) oder/und eine Brennkammerwand (21) umfasst.

9. Vorrichtung (1) nach einem der Ansprüche 6 bis 8,
**dadurch gekennzeichnet, dass**
mindestens ein Teil des fein gefilterten Luftgemisches (3) bei einer Kraftwerksanlage (17) als Verbrennungsluftgemisch einer Turbinenbrennkammer (23) zuführbar ist.

10. Vorrichtung (1) nach einem der Ansprüche 6 bis 9,
**dadurch gekennzeichnet, dass**
mindestens ein Teil des fein gefilterten Luftgemisches (3) mindestens einem Generator (25) einer Kraftwerksanlage (17) als Kühlluft zuführbar ist.
